# EUROPEAN PATENT APPLICATION

(11) **EP 4 105 855 A1**
(43) Date of publication of application: **21.12.2022**
(21) Application number: 21774903.5
(22) Date of filing: 07.01.2021
(51) Int. Cl.: G06Q 10/00, G06Q 50/10

(54) **DISMANTLEMENT WORK MONITORING SERVER**

(30) Priority: 23.03.2020 JP 2020051926
(71) Applicant: KOBELCO CONSTRUCTION MACHINERY CO., LTD., Hiroshima-shi Hiroshima 731-5161 (JP)
(72) Inventor: TAKAMURA, Reona, Tokyo 141-8626 (JP); TANAKA, Kiyokazu, Tokyo 141-8626 (JP)
(74) Representative: Schön, Christoph
(86) International application number: PCT/JP2021/000413
(87) International publication number: WO 2021/192484

(57) **Abstract**

An object of the present invention is to provide a system that ensures the traceability of dismantlement target objects. A dismantlement work monitoring system includes: a dismantlement-progress-information acquisition unit 13 that acquires progress information on progress of the dismantlement work; an identification-information acquisition unit 15 that acquires identification information used to identify the dismantlement target object (scrap automobile SC), the identification information being held by an identifier attached to the dismantlement target object; and an associated-information storage unit 12 that stores associated information in which the progress information is associated with the identification information.

## Description

### Technical Field

The present invention relates to a scrap automobile monitoring system that monitors the state of dismantlement of scrap automobiles.

### Background Art

A technique has been proposed in which a disused-automobile recycling management system that manages recycling of disused automobiles and includes an automobile-recycling management unit including a storage unit and a recycling company terminal connected to the above automobile-recycling management unit (for example, see Patent Literature 1).

### Citation List

### Patent Literature

Patent Literature 1: Japanese Patent Laid-Open No. 2001-328574

### Summary of Invention

### Technical Problem

Patent Literature 1 discloses a disused-automobile recycling management system that manages recycling of disused automobiles.

Meanwhile, in developing countries where a manifest system is poor, it is difficult to monitor, about scrap automobiles, when, where, what was disposed of by whom and how it was disposed of.

In light of the situation, an object of the present invention is to provide a monitoring server and a monitoring system that make it easy to monitor whether dismantlement processes have been performed appropriately for scrap automobiles.

### Solution to Problem

A dismantlement work monitoring system of the present invention is
a dismantlement work monitoring server used for a system that monitors dismantlement work for a dismantlement target object by a dismantling device, including:
a dismantlement-progress-information acquisition unit that acquires progress information on progress of the dismantlement work;
an identification-information acquisition unit that acquires identification information used to identify the dismantlement target object, the identification information being held by an identifier attached to the dismantlement target object; and
an associated-information storage unit that stores associated information in which the progress information is associated with the identification information.

Since in the dismantlement work monitoring system of the present invention, associated information is generated in which progress information on dismantlement of dismantlement target objects such as scrap automobiles is associated with identification information to identify the dismantlement target objects, the dismantlement target objects and the dismantlement work for the dismantlement target objects can be easily managed by using the associated information. This makes it possible to make monitoring of dismantlement target objects and dismantlement work more efficient. In addition, with the present invention, it is possible to ensure the traceability of dismantlement target objects.

The dismantlement work monitoring system of the present invention includes a determination unit that determines based on the progress information whether the dismantlement work has progressed appropriately.

Since the present invention makes it possible to determine based on the progress information associated with the identification information whether the dismantlement work has progressed appropriately, it is possible to easily know whether a specific dismantlement target object has been dismantled appropriately.

### Brief Description of Drawings

FIG. 1 is a schematic diagram of a dismantlement work monitoring system including a dismantlement work monitoring server of the present invention.
FIG. 2 is a diagram illustrating a dismantling machine and an image-capturing device.
FIG. 3 is a block diagram of the dismantlement work monitoring server of the present invention.
FIG. 4 is a diagram illustrating an example of a cumulative movement-distance graph.
FIG. 5 is a flowchart illustrating an example of a process routine of a dismantlement work monitoring server of the present invention.
FIG. 6 is a flowchart illustrating an example of a process routine of a dismantlement work monitoring server of the present invention.

### Description of Embodiments

Hereinafter, a dismantlement work monitoring system 100 according to an embodiment will be described with reference to the drawings. The following description is, as an example, based on a case of monitoring work of dismantling scrap automobiles by using a dismantling machine. However, dismantlement target objects that are dismantled in the work to be monitored are not limited to scrap automobiles. Dismantlement target objects may be, for example, things worth recycling (collection of parts included in dismantlement target objects, collection of materials included in dismantlement target objects), other than scrap automobiles.

In addition, the following description is based on an example of a case in which each dismantlement target object has identification information that identifies the dismantlement target object. Specifically, the following description is based on a case in which each dismantlement target object has a visible identification mark such as a one-dimensional code or a two-dimensional code on its surface.

In the following description, the expression that various devices "are configured to" perform specified functions include the meaning that the various devices "are programmed" or "are designed" such that a processor (computation processing device) such as a CPU included in the various devices reads software, in addition to necessary information, from memories such as ROM and RAM or recording media and executes computation processing on the information according to the software to be capable of achieving the above specified functions.

In addition, in the following description, the expression that a functional block "is configured to" perform a specified function includes the meaning that the functional block "is programmed" or "is designed" such that a computation processing device such as a CPU that performs processing on the function of the functional block reads software, in addition to necessary information, from memories such as ROM and RAM or recording media and executes computation processing on the information according to the software to be capable of achieving the above specified function.

The functions of a plurality of functional blocks may be implemented by a common processor, or the function of each functional block may be implemented by a plurality of intercommunicable processors working together.

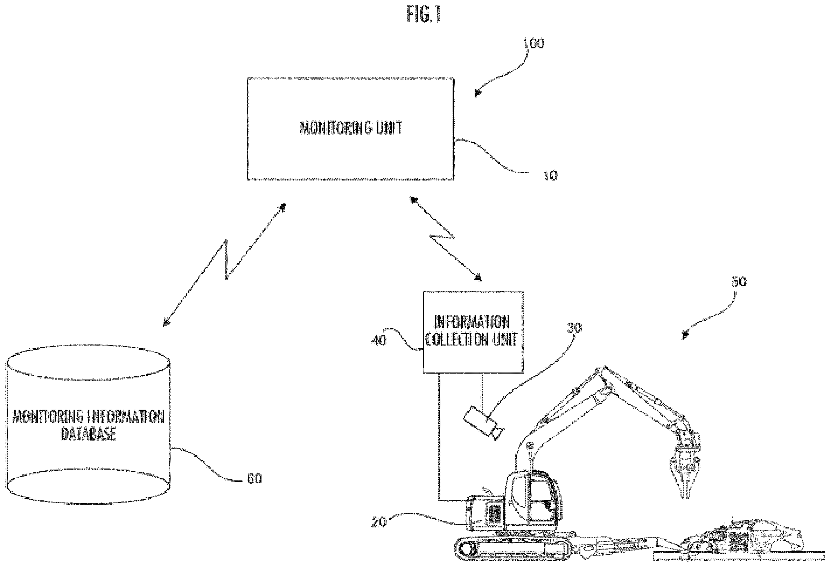

FIG. 1 is a general view of the dismantlement work monitoring system 100. As illustrated in FIG. 1, the dismantlement work monitoring system 100 includes a monitoring server 10 which is a dismantlement work monitoring server that acquires information on dismantlement work and monitors the dismantlement work based on the information.

The dismantlement work monitoring system 100 includes a work site system 50 including a dismantling machine 20, an image-capturing device 30 capable of capturing images of dismantlement work performed by the dismantling machine 20, and an information collection unit 40 that is connected to the dismantling machine 20 and the image-capturing device 30 so as to be able to communicate information with them and collects information useful for the monitoring server 10 to monitor dismantlement work from the dismantling machine 20 and the image-capturing device 30. The information collection unit 40 is configured to be able le to transmit information useful to monitor the dismantlement work to the monitoring server 10.

The dismantlement work monitoring system 100 also includes a database 60 that stores data necessary for the monitoring server 10 to monitor dismantlement work, based on information from the information collection unit 40 and is configured to be able to communicate information with the monitoring server 10. For example, the database 60 stores regular action information on the action of the dismantling machine 20 for the case in which dismantlement work is progressing appropriately or according to the regular procedure or on the operation performed by the action.

The regular action information includes, for example, information on the amount of movement of each part of the dismantling machine 20 for the case in which dismantlement work is progressing appropriately or according to the regular procedure. The regular action information also includes, for example, information on specific actions of the dismantling machine 20 or the operations achieved by the actions for the case in which the dismantlement work is progressing appropriately or according to the regular procedure or information on the order of the specific actions or the operations.

For example, in the dismantlement work monitoring system 100, the monitoring server 10 can monitor whether the dismantlement work is being performed appropriately or progressing appropriately, by using data collected from the information collection unit 40 at the work site and data stored in the database 60. Specifically, for example, the monitoring server 10 can monitor whether the dismantlement work is being performed appropriately by comparing data on the state or progress of dismantlement work collected from the information collection unit 40 with data stored in the database 60.

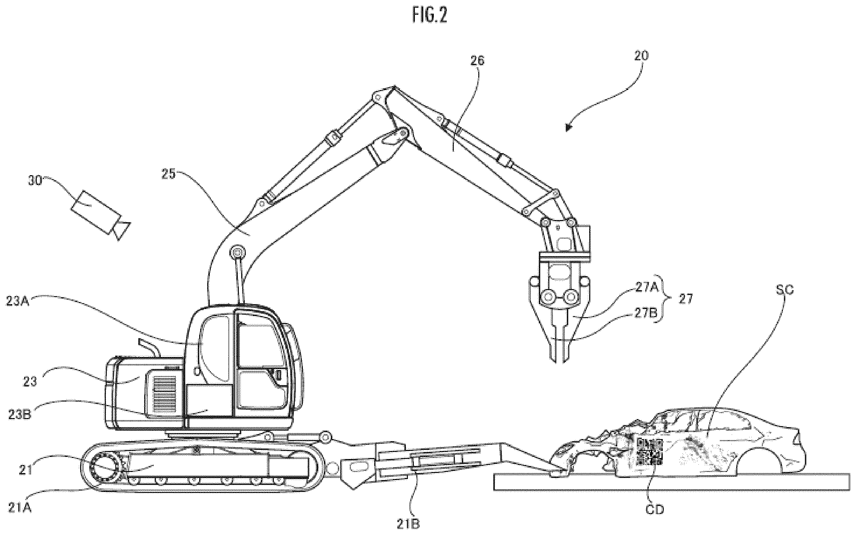

FIG. 2 is a diagram illustrating the dismantling machine 20 and a scrap automobile SC being dismantled by the dismantling machine 20. In the following description, the directions of front-rear and upper-lower are the directions that the bidirectional arrows in the drawings indicate. As for the right-left direction, the direction toward the near side of the drawing plane is defined as the right direction, and the direction toward the far side of the drawing plane the left direction. The following description is based on a case in which the scrap automobile SC is placed in front of the dismantling machine 20.

In addition, the following description is based on an example of a case in which an identification code serving as an identifier including identification information to identify the scrap automobile SC is shown on a surface of the scrap automobile SC. Specifically, the following description is based on an assumption that the scrap automobile SC has a two-dimensional code CD such as a QR code (registered trademark) shown on its surface. The identification code shown on the scrap automobile SC may be directly drawn on a surface of the scrap automobile SC. Alternatively, a sheet on which an identification code is drawn may be attached to a surface of the scrap automobile SC.

As illustrated in FIG. 2, the dismantling machine 20 includes a base 21 and a turning part 23 located on the base 21 to be capable of rotating relative to the base 21. The base 21 includes a crawler device 21A capable of moving the base 21 and a clamp device 21B extending forward from the base 21 and capable of fixing a scrap automobile SC. The turning part 23 includes an operation room 23A where operation devices such as levers to operate the actions of the dismantling machine 20 are disposed and the operator who operates the operation devices gets on board. The dismantling machine 20 can travel by itself using the crawler device 21A included in the base 21 with the base 21 and the turning part 23 together as one body.

The turning part 23 also includes a dismantling-machine control unit 23B that controls the action of the dismantling machine 20. The dismantling-machine control unit 23B controls the action of the dismantling machine 20 based on input to the operation device disposed in the operation room 23A. The dismantling-machine control unit 23B is capable of communicating with the information collection unit 40 and transmitting, to the information collection unit 40, information on action control of the dismantling machine which can be one type of operation information on the operation state of the dismantling machine 20.

The boom 25 is an arm member having one end attached to the turning part 23 such that the boom 25 is rotatable relative to the turning part 23 around the rotation shaft extending in the right-left direction. Specifically, the boom 25 is configured to be able to perform hoisting actions relative to the turning part 23. The arm 26 is an arm member attached to the distal end, in other words, the other end of the boom 25 to be capable of rotating around a rotation shaft extending in the right-left direction relative to the boom 25. The front end attachment 27 is provided at the front end of the arm 26 to be capable of rotating around an axis along the longitudinal direction of the arm 26 and also to be capable of swinging relative to the arm.

Each of the boom 25, the arm 26, and the front end attachment 27 operates by hydraulic control. In this implementation example, the front end attachment 27 is a crushing device including a pair of gripping parts 27A and 27B that are hydraulically operated. The dismantling machine 20 can grip part of a dismantlement target object and move or tear off the gripped part with the gripping parts 27A and 27B. Note that the front end attachment 27 may be, other than a crushing device, for example, a bucket, a grappler, or a lifting magnet.

As described above, the dismantling-machine control unit 23B is configured to be able to transmit information on action control of the dismantling machine 20 to the information collection unit 40 (see FIG. 1). The information on action control includes, for example, action control parameters related to hydraulic signals or pump pressures to drive the boom 25, arm 26, or front end attachment 27 of the dismantling machine 20.

The information on action control may be, for example, action control parameters to drive the crawler device 21A of the dismantling machine 20. The dismantling-machine control unit 23B can sequentially acquire information on these kinds of action control. The information collection unit 40 is configured to transmit the information on action control transmitted from the dismantling-machine control unit 23B to the monitoring server 10 as operation information indicating the operation state of the dismantling machine 20.

The operation information may be information including the operation state of the dismantling machine 20 at each time. Specifically, the operation information may include the operation state of the dismantling device and the time corresponding to the operation state. For example, the operation information may include information indicating the operation state of the actions or the like of the dismantling machine at a plurality of time points during dismantlement work. Specifically, the operation information may include information in which each of the time points is associated with information on the action that the dismantling machine was performing at the time point.

In addition, for example, the operation state information may include information in which the occurrence of an irregular event such as an accident or inappropriate work in dismantlement work is associated with the occurrence time of the irregular event.

The image-capturing device 30 is, for example, a camera capable of capturing images of the dismantling machine 20 and the scrap automobile SC from behind the dismantling machine 20. Specifically, for example, the image-capturing device 30 is capable of capturing images of actions of the dismantling machine 20 and the states of dismantlement work on the scrap automobile SC by the dismantling machine 20. The image-capturing device 30 is configured to be able to capture an image of the two-dimensional code CD shown on the scrap automobile SC.

The image-capturing device 30 is capable of capturing still images or moving images (hereinafter also simply referred to as images) and transmitting captured image data including the captured still images or moving images to the information collection unit 40. Note that the image-capturing device 30 may be capable of intermittently capturing still images or capturing moving image. The captured image data including still images or moving images captured by the image-capturing device 30 may include the time of image-capturing, in other words, information on the image-capturing time. The information collection unit 40 is configured to transmit the captured image data transmitted from the image-capturing device 30 to the monitoring server 10.

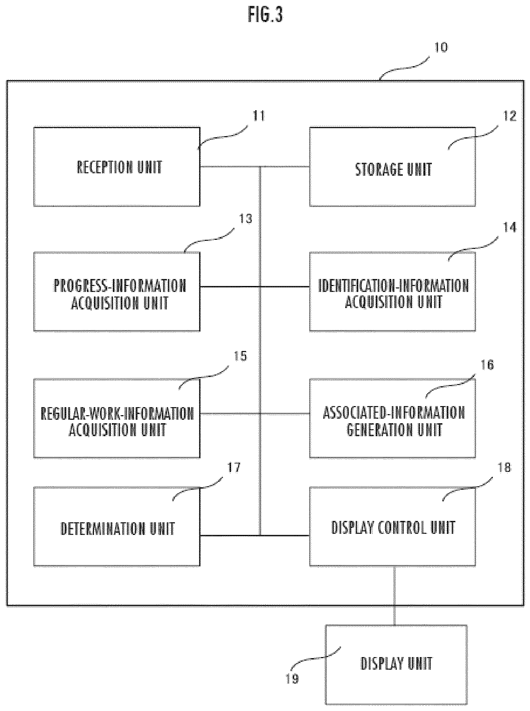

FIG. 3 is a block diagram of the monitoring server 10. The reception unit 11 is a functional part that receives information from the outside. Specifically, the reception unit 11 is configured to be able to receive information from the information collection unit 40 and the monitoring information database 60. Hereinafter, unless otherwise specified, reception or acquisition of data from the outside is performed via the reception unit 11.

The storage unit 12, including a storage device, is configured to be able to store external information received by the monitoring server 10 or various kinds of data generated inside the monitoring server 10. Examples of the storage device included in the storage unit 12 include a magnetic storage device such as an HDD, a semiconductor storage device such as an SSD or a flash drive, and an optical storage device such as an optical disk. Note that a storage device included in the storage unit 12 and a storage medium for storing data may be stationary or may be removable.

The progress-information acquisition unit 13 receives the operation information and/or information including captured image data transmitted from the information collection unit 40, via the reception unit 11 as progress information on progress of dismantlement work. As described above, captured image data may include, together with images captured by the image-capturing device 30, information on the times at which the images were captured. The progress-information acquisition unit may receive operation information and/or captured image data sequentially or at one time together.

Times included in captured image data may be absolute times or times elapsed since the start time point of the dismantlement work. The start time point of the dismantlement work is, for example, the time point at which a scrap automobile was brought into the dismantlement work site. The end time point of the dismantlement work is, for example, the time point at which a scrap automobile subjected to dismantlement work is put into a press machine.

Note that the progress-information acquisition unit 13 may acquire, as progress information, information on the time actually taken to dismantle one scrap automobile SC in the dismantlement work corresponding to the progress information, information on the travel distance of the dismantling machine 20 actually taken to dismantle the one scrap automobile, and information on the fuel consumption of the dismantling machine 20 actually taken to dismantle the one scrap automobile, the electric power consumption of the dismantling machine 20 actually taken to dismantle the one scrap automobile, and the like. This information may be acquired based on the foregoing captured image data and operation information.

The progress information may include information that identifies the place where the dismantlement work corresponding to the progress information is performed. For example, the progress information may include the location of the dismantlement work place indicated by the name of the country or the like where the dismantlement work is performed, the name of the dismantlement work place, and the like.

The progress-information acquisition unit 13 may acquire, as progress information, the conditions of actions of the dismantling machine 20 in the dismantlement work corresponding to the progress information. For example, the progress-information acquisition unit 13 may acquire progress information including action path information including action paths of the front end attachment 27 of the dismantling machine 20 or parameters concerning to the action paths. This action path information may include time information. Specifically, the action path information may include action paths associated with elapsed time or the changes in parameters concerning the action paths.

This action path information may be acquired based on action control information included in the above operation information. The action path information may be acquired by calculating the position coordinates of the front end attachment 27 at each time based on images captured by the image-capturing device 30.

Note that in the case of acquiring times and position coordinates only intermittently, an interpolation process may be performed based on the acquired coordinates and times. Specifically, a path through which the front end attachment 27 is likely to have passed may be determined by estimating the coordinates where the front end attachment 27 was present between the acquired times and interpolating the estimated coordinates between the actually acquired coordinates.

The progress information may include specific action information indicating whether, of the actions that the dismantling machine 20 performs, one or two or more kinds of specific actions were performed or the order in which the specific actions were performed. The one or two or more specific actions may include, for example, an action to grip the hood of the scrap automobile SC with the front end attachment, an action to peel off the hood, an action to pull off a specified harness, and the like. Note that the operation information indicating the operation state of the dismantling machine 20 may be obtained by performing image analysis on captured images.

The identification-information acquisition unit 15 is configured to acquire identification information that identifies the scrap automobile SC being dismantled in the dismantlement work corresponding to the progress information acquired by the above progress-information acquisition unit 13 via the reception unit. Specifically, for example, the identification-information acquisition unit 15 acquires an image included in captured image data of the progress information and, based on the two-dimensional code CD captured in the image, acquires identification information that identifies the target scrap automobile SC in the dismantlement work. The identification information may be, for example, the vehicle chassis number of the scrap automobile SC.

Note that the identification-information acquisition unit 15 does not necessarily have to acquire an image to acquire identification information. Specifically, for example, a configuration may be such that the image-capturing device 30 or the information collection unit 40 acquires identification information from an image including a two-dimensional code CD and transmits the identification information to the monitoring server 10, and thus the identification-information acquisition unit 15 acquires only the identification information. Alternatively, for example, the identification-information acquisition unit 15 may acquire identification information by receiving input of identification information such as the vehicle chassis number of the scrap automobile SC being dismantled in the dismantlement work corresponding to specified progress information, from the operator who is operating the monitoring server 10.

As another example in which the identification-information acquisition unit 15 acquires identification information, the vehicle chassis number is indicated on the windshield of the scrap automobile SC, and the identification-information acquisition unit 15 acquires the vehicle chassis number from an image including the vehicle chassis number. In this case, the vehicle chassis number is read by a publicly known technique (such as OCR).

The regular-work-information acquisition unit 15A is configured to be able to acquire, from the database 60, regular action information on the actions of the dismantling machine 20 for the case in which dismantlement work is progressing appropriately or according to the regular procedure.

As described above, the regular action information, for example, includes information on the amount of movement of each part of the dismantling machine 20 for the case in which dismantlement work is progressing appropriately or according to the regular procedure. In addition, for example, the regular action information includes information on specific actions of the dismantling machine 20 for the case in which dismantlement work is progressing appropriately or according to the regular procedure or information on the order of the specific actions.

For example, the regular action information may include information on the time originally required to dismantle one scrap automobile. The regular action information may include information on the operating time of the dismantling machine 20 originally required to dismantle one scrap automobile SC, information on the cumulative movement distance of the front end attachment 27 originally required when dismantling one scrap automobile SC, information on the travel distance of the dismantling machine 20 originally required to dismantle one scrap automobile, information on the fuel consumption of the dismantling machine 20 originally required to dismantle one scrap automobile, information on the electric power consumption of the dismantling machine originally required to dismantle one scrap automobile, and like information.

The associated-information generation unit 16 is configured to generate associated information in which progress information on the progress of one dismantlement work operation is associated with the identification information on the dismantlement target object being dismantled in the one dismantlement work operation and to store the generated associated information into the storage unit 12. When storing the associated information, the storage unit 12 functions as an associated-information storage unit.

For example, the associated-information generation unit 16 associates captured image data in dismantlement work with identification information on the target scrap automobile SC in the dismantlement work to generate associated information including these pieces of information. In addition, for example, the associated-information generation unit 16 associates the operation information on the dismantling machine 20 in dismantlement work with the identification information on the target scrap automobile SC in the dismantlement work to generate associated information including these pieces of information.

In other words, the associated-information generation unit 16 is configured to associate progress information including captured image data and/or operation information in dismantlement work with the identification information on the scrap automobile SC that is the dismantlement target object of the dismantlement work to generate associated information including these pieces of information. Note that the associated information may include the image-capturing times of the images included in captured image data or the times corresponding to the operation information.

Specifically, for example, the progress information may include action-control parameter data in which action control parameters are lined in time series. In addition, for example, the progress information may include cumulative movement-distance data in which cumulative movement distances of the front end attachment 27 are lined in time series. In addition, for example, the progress information may include the foregoing specific action information.

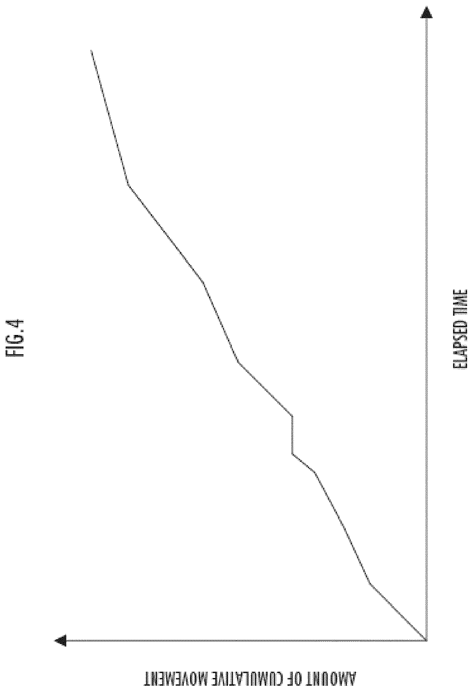

FIG. 4 shows a cumulative movement-distance graph which is an example of data of the cumulative movement distance of the front end attachment 27. In the cumulative movement-distance graph of FIG. 4, the horizontal axis represents time, and the vertical axis the cumulative movement distance of the front end attachment 27.

The determination unit 17 is configured to perform work correctness determination that determines based on progress information whether the dismantlement work is being or has been executed appropriately. The determination unit 17, for example, may acquire progress information including operation information and be capable of performing work correctness determination based on the operation information. Specifically, for example, the determination unit 17 may perform work correctness determination from whether the action of the dismantling machine 20 that can be acquired based on the operation information is appropriate as the action in the dismantlement work.

This work correctness determination may be performed sequentially based on the progress information sequentially acquired. In other words, the work correctness determination may be performed simultaneously with the progress of the work at the work site, and it may be determined whether dismantlement work is being performed appropriately. Alternatively, this work correctness determination may be performed based on progress information in a certain period acquired together, for example, progress information for a day. For example, in the case in which a plurality of dismantlement work operations are performed in a day, the progress information on each dismantlement work operation may be extracted out of the progress information for the day, and it may be determined based on the extracted progress information whether each dismantlement work operation was performed appropriately.

For example, the determination unit 17 acquires specific action information and may perform work correctness determination by determining whether specific actions necessary for dismantling in the dismantlement work are being performed or whether the specific actions necessary for the dismantlement work are being performed in the appropriate order. In addition, for example, the determination unit 17 acquires cumulative movement distance information and may perform work correctness determination by determining whether the cumulative movement distance of the front end attachment 27 acquired based on the cumulative movement distance information is appropriate as the cumulative movement distance necessary for the dismantlement work.

For example, the regular action information stores a cumulative movement-distance graph of the front end attachment 27, the same as or similar to the one illustrated in FIG. 4, for the case in which a dismantlement work operation was performed appropriately, as a regular cumulative-movement-distance graph, and it may be determined whether the dismantlement work is being performed appropriately by comparing a cumulative movement-distance graph acquired in the dismantlement work operation for the monitoring target with the regular cumulative-movement-distance graph.

Alternatively, the determination unit 17 acquires progress information including captured image data and may perform work correctness determination based on the captured image data. Specifically, for example, the determination unit 17 recognizes the situation at the dismantlement work site in time series from details in the images included in the captured image data and may perform work correctness determination based on the recognized situation.

For example, the determination unit 17 compares images at the dismantlement work site at different times and determines that a dismantlement work operation should have been performed for one scrap automobile SC in a specific period. Specifically, for example, the determination unit 17 compares an image of a dismantlement work site including a scrap automobile SC captured at 10:00 a.m. on October 10, 2019 with an image of the dismantlement work site including a scrap automobile SC captured at 10:01 a.m. on October 10, 2019 and determines whether the colors, the shapes, or the body types (sedan, van, coupe, or the like) of these scrap automobiles approximately agree with each other.

In the case in which the colors and shapes of the scrap automobiles SC approximately agree with each other between the two images, it is determined for the scrap automobile SC that there is a high possibility that the white sedan scrap automobile was subjected to dismantlement work at the dismantlement work site at least from the time point, 10:00 a.m. on October 10, 2019 to 10:01 a.m. on October 10, 2019.

Alternatively, for example, the regular dismantlement determination unit 17 compares the vehicle chassis number of the white sedan scrap automobile held by the QR code (registered trademark) attached to the white sedan scrap automobile, read at 10:00 a.m. on October 10, 2019 with the vehicle chassis number of the white sedan scrap automobile held by the QR code (registered trademark) attached to the scrap automobile, read at 10:01 a.m. on October 10, 2019 and determines whether the vehicle chassis numbers completely agree with each other.

Here, in the case in which these vehicle chassis numbers agree with each other, it is determined for the white sedan scrap automobile that there is a high possibility that the white sedan scrap automobile with the vehicle chassis number attached to it was subjected to dismantlement work at the dismantlement work site at least from the time point, 10:00 a.m. on October 10, 2019 to 10:01 a.m. on October 10, 2019.

The determination unit 17 may recognize the state of dismantlement work in the period during which this dismantlement work is being execute, based on the above progress information or captured image data, and perform work correctness determination on whether dismantlement work was being executed appropriately in the period.

For example, based on images, the time at which each process in the dismantlement work operation is executed for a scrap automobile may be determined. For example, what time a process of removing which part was performed may be determined. For example, based on the image-capturing time of an image at the moment when the roof, which is a part to be removed first in a dismantlement work process, of a scrap automobile is removed, it is possible to determine the time point when the dismantlement work operation started by removing the roof from the scrap automobile.

For example, it is possible to determine when dismantling of the scrap automobile finished, based on the image-capturing time of an image at the moment when the scrap automobile was pressed, which is the last step of the dismantlement work operation for the scrap automobile. The work correctness determination may be performed based on the time when each identified step was executed. The start time point and the end time point of an identified dismantlement work operation may be used when extracting progress information on each dismantlement work operation from the progress information including information on the above plurality of dismantlement work operations.

The above work correctness determination may be performed by only using progress information and/or captured image data. The above work correctness determination may be performed by comparing progress information and/or captured image data with regular work information. Specifically, the above work correctness determination may be performed by comparing information on dismantlement work obtained from the progress information and/or captured image data acquired via the information collection unit 40 with the regular work information and determining whether the information on dismantlement work agrees with or is close to the regular action information.

For example, the determination unit 17 acquires from the monitoring information database 60, as the regular action information, one or more types of information from the group of information on the operating time of the dismantling machine 20 originally required to dismantle a scrap automobile SC, information on the cumulative movement distance of the front end attachment 27 originally required to dismantle a scrap automobile SC, information on the travel distance of the dismantling machine 20 originally required to dismantle a scrap automobile SC, and information on the fuel consumption in the dismantling machine 20 originally required to dismantle a scrap automobile SC and the electric power consumption in the dismantling machine 20 originally required to dismantle a scrap automobile SC.

The determination unit 17 acquires actual-action information which is action information corresponding to the one or more types of the above regular action information based on the progress information and/or captured image data and determines whether the actual-action information agrees with the regular action information. The "agreement" expresses a concept including not only complete agreement but also approximate agreement. The determination unit 17, in the case in which the actual-action information agrees with the regular action information, determines that the dismantlement work for the scrap automobile SC was, or is likely to have been, executed appropriately.

Conversely, in the case in which the actual-action information does not agree with the regular action information, the determination unit 17 determines that dismantlement work was not, or is likely not to have been, executed appropriately. Note that the determination unit 17 not only determines whether the dismantlement work was executed appropriately but may perform numerical evaluation or grade evaluation on the possibility of having been executed appropriately. For example, the determination unit 17 may perform numerical evaluation or grade evaluation on the possibility of the dismantlement work having been executed appropriately, according to the degree of difference between the actual-action information and the regular action information.

The display control unit 18 is configured to output information generated in the monitoring device 10 as visible images. The display control unit 18 is configured to output, for example, the progress information, the identification information, and/or the results of the work correctness determination, described above, to the outside.

The display unit 19 is connected to the display control unit 18 to be capable of communicating information therewith, and is configured to be able to display images outputted from the display control unit 18. The display unit 19 may be, for example, a display device for a liquid crystal display.

The above description is based on an example in which the identification information is acquired based on a two-dimensional code such as a QR code (registered trademark) or symbols written by an operator or the like on the vehicle body. In the case in which the identification information is acquired based on numbers or symbols written by an operator or the like on the vehicle body, the numbers or symbols may be differentiated by their colors, and the identification information may be acquired based on information including the numbers or symbols and their color.

As described above, dismantlement target objects 30 may be any resources that are worth recycling (collection of parts included in dismantlement target objects, collection of materials included in dismantlement target objects).

The expression of the foregoing scrap automobile is a concept including, out of the automobiles, automobile the use of which is temporarily or permanently terminated and the registrations of which are temporarily or permanently canceled, automobiles to be subjected to a complete deregistration process, automobiles from which useful parts can be separated, and automobiles that can be reused as used cars.

Other examples of dismantlement target objects include engines, carburetors, oil filters, oil coolers, mufflers, car supplies, motorbikes, motorbike supplies, bicycles, electric bicycles, bicycle supplies, monocycles, tricycles, personal computers, personal computer supplies, smartphones, home appliances, cameras, sporting goods, outdoor goods, health appliances, houses, buildings, apartments, condominiums, interiors, furniture, fashion goods, watches, accessories, shoes, clothes, kitchen utensils, kitchen equipment, tools, construction machinery, industrial machinery, furniture, child seats, strollers, game machines, play machines, toys, and play equipment.

For example, the above identification information is not limited to vehicle chassis numbers but may be product numbers, manufacturer's serial numbers, manufacturer names, seller names, product names, dates of manufacture, dates of shipment, or the like.

Other examples of information holders that hold identification information include electronic tags such as radio-frequency identification (RFID), color codes, letters, numbers, figures, symbols, and combinations of two or more of these.

The display unit 19 may be any display device that has a function of displaying the determination results by the regular-dismantlement determination unit. The display unit 19 may be, for example, a projector which projects images on a screen, or the like.

As a matter of course, a speaker may be provided together with the display unit 19 or as an alternative to the display unit 19, and determination results may be read aloud with voice.

Since in the foregoing monitoring server 10 and the dismantlement work monitoring system including the same, associated information is generated in which progress information on dismantlement of dismantlement target objects such as scrap automobiles SC is associated with identification information to identify the dismantlement target objects, the dismantlement target objects and dismantlement work for the dismantlement target objects can be easily managed by using the associated information. This makes it possible to make monitoring of dismantlement target objects and dismantlement work more efficient.

### [Example of Process of Storing Associated Information by Monitoring Unit]

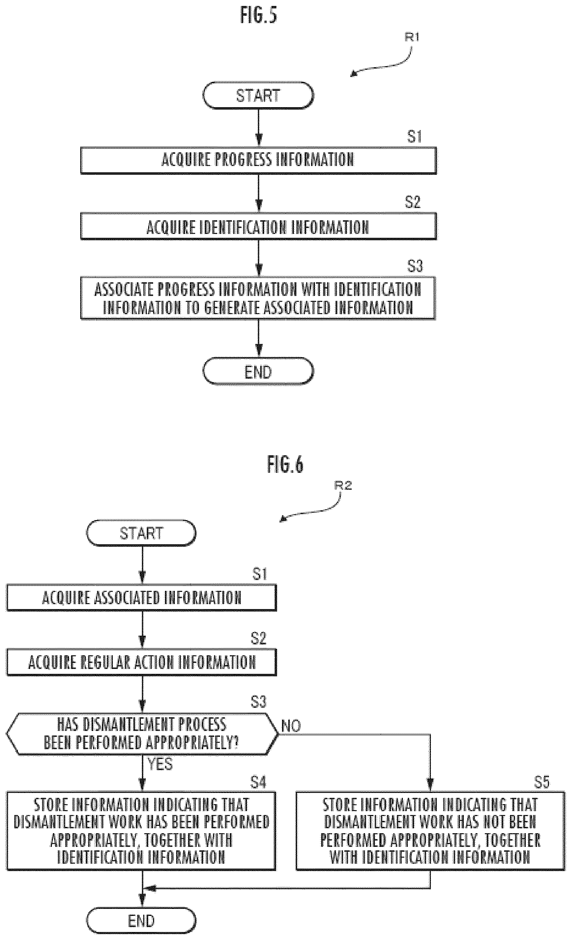

FIG. 5 is a diagram illustrating an information storage routine R1 which is an example of a process routine for the case in which the monitoring unit 10 stores associated information. For example, the monitoring unit 10 starts the information storage routine R1 when the power is turned on and executes control for storing associated information.

First, at step S1, the monitoring unit 10 acquires progress information on one entire dismantlement work operation. This acquisition of progress information is performed, for example, by determining the start time point and the end time point of one dismantlement work operation by the above method from the progress information received via the reception unit 11 and extracting the progress information between the start time point and the end time point. After step S1 ends, the process proceeds to step S2.

At step S2, the monitoring unit 10 acquires the identification information on the scrap automobile SC. As described above, in the case in which the progress information includes an image that captured the scrap automobile SC, the identification information is acquired based on the identification code attached to the captured scrap automobile SC. Note that the identification code or identification information on the scrap automobile SC may be acquired separately from the outside. Alternatively, as described above, identification information such as the vehicle chassis number of a scrap automobile SC may be acquired from input of an operator who operates the monitoring unit 10. After step S2 ends, the process proceeds to step S3.

At step S3, the monitoring unit 10 associates the progress information acquired at step S1 with the identification information acquired at step S2 to generate associated information including these pieces of information and stores it into the storage unit 12. When step S3 ends, the routine ends. Note that the monitoring unit 10, when generating associated information, may output it in a visible manner to the display unit 19.

### [Example of Work Correctness Determination Process by Monitoring Unit]

FIG. 6 is a diagram illustrating a correctness determination routine R2 which is an example of a process routine for the case in which the monitoring unit 10 executes work correctness determination. For example, the monitoring unit 10, when the power is turned on, starts the correctness determination routine R2 and executes control to perform work correctness determination. Note that in the correctness determination routine R2, determination is made by using progress information included in the associated information stored by a process such as the above information storage routine R1.

At step S1, the monitoring unit 10 acquires a piece of associated information including progress information and identification information (step SI).

At step S2, the monitoring unit 10 acquires the regular action information from the monitoring information database 60 (step S2).

At step S3, the monitoring unit 10 compares the progress information included in the piece of associated information acquired at step S1 with the regular action information acquired at step S2 to determine whether the dismantlement work has been performed appropriately. As described above, this determination may be performed by comparing the information indicating the actual action of the dismantling machine 20 in the dismantlement work included in the progress information with the information indicating the action of the dismantling machine when the dismantlement work was performed appropriately, included in the regular action information. For example, the actual action of the dismantling machine 20 is compared to the action of the dismantling machine when the dismantlement work was performed appropriately, and if the similarity between these is high, it can be determined that the dismantlement work was performed appropriately.

As an example, for example, the cumulative movement-distance graph of the front end attachment 27 of the dismantling machine 20 in the above actual dismantlement process is compared to the cumulative movement-distance graph indicating the cumulative movement distance of the front end attachment of the dismantling machine at the time when the dismantlement work was performed appropriately, included in the regular action information, and it can be determined based on the similarity between these whether the dismantlement work was performed appropriately.

If it is determined at step S3 that the dismantlement work was performed appropriately (step S3: YES), the monitoring unit 10 stores information indicating that the dismantlement work has been performed appropriately into the storage unit 12 with the identification information (step S4), and then, the routine ends. If it is determined at step S3 that dismantlement work has not been performed appropriately (step S3: NO), the monitoring unit 10 stores information indicating that the dismantlement work has not been performed appropriately, with the identification information (step S5), and then, the routine ends.

Note that along with or regardless of the execution at step S4 and step S5, the determination result at step S3 may be displayed on the display unit 19 in a visible manner. The information stored at step S3 and step S4 may be transmitted to the outside.

Note that the order of processes in the flowcharts for the dismantlement work monitoring system S is not limited to the foregoing order, but the order may be exchanged appropriately as long as it is possible to monitor in time series whether dismantlement work is correctly executed. As a matter of course, as long as the present invention can be implemented, an unnecessary step may be skipped.

### Other embodiments

Note that the present invention is not limited to the embodiment described above, but other embodiments may be employed. The following shows some other embodiments.

Although the foregoing embodiment is based on the assumption that the scrap automobile SC to be monitored is one scrap automobile, a group of scrap automobiles may be managed together (lot management) and monitored.

For example, in the case in which ten scrap automobiles are monitored as a group of scrap automobiles (lot), the correctness determination unit 17 may be configured such that if the dismantlement work did not take more than specified times (for example, ten times or more) the work time for the case in which one scrap automobile was dismantled, the correctness determination unit 17 determines that the dismantlement work has not been executed appropriately in the dismantlement work site.

Alternatively, in this case, the determination unit 17 may be configured such that if the moving distance of the dismantling machine is not longer than specified times (for example, ten times or more) the distance for the case in which one scrap automobile was dismantled, the determination unit 17 determines that the dismantlement work has not been executed appropriately in the dismantlement work site.

### Reference Signs List

- 100: dismantlement work monitoring system
- 10: monitoring unit
- 11: reception unit
- 12: storage unit
- 13: progress-information acquisition unit
- 14: operation-information acquisition unit
- 15: identification-information acquisition unit
- 16: associated-information generation unit
- 17: determination unit
- 18: display control unit
- 19: display unit
- 20: dismantling machine
- 30: image-capturing device
- 40: information collection unit
- 50: work site system
- 60: monitoring information database
- SC: scrap automobile
- CD: two-dimensional code

## Claims

1. A dismantlement work monitoring system that monitors dismantlement work for a dismantlement target object by a dismantling device, comprising:
a dismantlement-progress-information acquisition unit that acquires progress information on progress of the dismantlement work;
an identification-information acquisition unit that acquires identification information used to identify the dismantlement target object, the identification information being held by an identifier attached to the dismantlement target object; and
an associated-information storage unit that stores associated information in which the progress information is associated with the identification information.

2. The dismantlement work monitoring system according to claim 1, further comprising
a determination unit that determines based on the progress information whether the dismantlement work has progressed appropriately.

3. The dismantlement work monitoring system according to claim 2, wherein
the progress information includes operation state information on an operation state of the dismantling device during the dismantlement work, and the determination unit makes a determination based on the operation state.

4. The dismantlement work monitoring system according to claim 3, wherein
the operation state information includes information on an amount of cumulative movement of a specified part of the dismantling device during the dismantlement work, and the determination unit makes a determination based on the amount of the cumulative movement.

5. The dismantlement work monitoring system according to claim 3 or 4, wherein
the operation state information includes specific action information on a specific action taken by the dismantling device during the dismantlement work, and the determination unit makes a determination based on the specific action information.

6. The dismantlement work monitoring system according to any one of claims 2 to 5, wherein
the determination unit compares the progress information with regular work information that is information including a regular dismantling procedure for dismantlement work operations in the dismantlement work and makes a determination based on whether the dismantlement work target object has been dismantled according to the regular dismantling procedure.

7. The dismantlement work monitoring system according to any one of claims 2 to 6, wherein
the progress information includes an operation state of the dismantling device during the dismantlement work and a time corresponding to the operation state.

8. The dismantlement work monitoring system according to any one of claims 1 to 7, wherein
the identification-information acquisition unit acquires the identification information based on image data including a captured image in which a state of dismantlement work is captured.

9. A dismantlement work monitoring server that monitors dismantlement work for a dismantlement target object by a dismantling device, comprising:
a dismantlement-progress-information acquisition unit that acquires progress information on progress of the dismantlement work;
an identification-information acquisition unit that acquires identification information used to identify the dismantlement target object, the identification information being held by an identifier attached to the dismantlement target object; and
an associated-information storage unit that stores associated information in which the progress information is associated with the identification information.
